# EUROPÄISCHE PATENTSCHRIFT

(11) **EP 4 474 329 B1**
(45) Veröffentlichungstag und Bekanntmachung des Hinweises auf die Patenterteilung: **08.04.2026**
(21) Anmeldenummer: 24180093.7
(22) Anmeldetag: 05.06.2024
(51) Int. Cl.: B65H 67/06

(54) **HÜLSENMAGAZIN**
SLEEVE MAGAZINE
MAGASIN DE MANCHONS

(30) Priorität: 06.06.2023 LU 504424
(43) Veröffentlichungstag der Anmeldung: 11.12.2024
(73) Patentinhaber: Saurer Spinning Solutions GmbH & Co. KG, 52531 Übach-Palenberg (DE)
(72) Erfinder: Mac, Tai, 52146 Würselen (DE); Thomas, Sebastian, 41189 Mönchengladbach (DE); Prediger, Eduard, 41061 Mönchengladbach (DE)
(74) Vertreter: Morgenthum-Neurode, Mirko

(56) Entgegenhaltungen:
- EP-A1- 3 569 539
- EP-A2- 0 916 614

## Beschreibung

Die Erfindung betrifft ein Hülsenmagazin. Die Erfindung betrifft eine Textilmaschine. Die Erfindung betrifft einen Maschinenkopf einer Textilmaschine. Die Erfindung betrifft eine Verwendung eines Hülsenmagazins, einer Textilmaschine und/oder eines Maschinenkopfs. Hülsenmagazine sind im Stand der Technik bekannt. Bei Auflaufspulen herstellenden Textilmaschinen, insbesondere Rotor- und Luftspinnmaschinen, sind der einzelnen Arbeitsstelle (Spinnstelle) Spulenhülsen zuzuführen, um auf diese das erzeugte Garn, insbesondere kreuzweise, aufzuspulen. Solche Spulenhülsen (auch bezeichnet als Leerhülsen) werden zumeist in Hülsenmagazinen der Textilmaschine auf sogenannten Aufsteckdornen zur automatischen Zufuhr zur Arbeitsstelle bevorratet. Diese Hülsenmagazine sind zumeist maschinenendseitig angeordnet.

Die Textilmaschinen sind heutzutage in der Lage, Mehrpartien herzustellen. Mit anderen Worten können auf einer einzigen Textilmaschine unterschiedliche Garnpartien hergestellt werden. Eine Garnpartie zeichnet sich dabei dadurch aus, dass diese ein Garn mit definierten Garneigenschaften aufweist, so dass Garne unterschiedlicher Garnpartien zueinander unterschiedliche Garneigenschaften haben.

Die Spulenhülsen können von einem Bediener manuell in den jeweiligen Bereich des Hülsenmagazins aufgesteckt werden, wobei es zu einem fehlerhaften Aufstecken kommen kann, was zu einer falschen Zufuhr von den falsch gesteckten Spulenhülsen zu den Arbeitsstellen führt. Dadurch entstehen entweder fehlerhafte Spulen, die verworfen werden müssen oder ein Spinnprozess muss abgebrochen werden. Beides führt zu einer Erhöhung der notwendigen Ressourcen und erhöht damit die Kosten.

EP 0 916 614 A2 offenbart ein Hülsenmagazin gemäß dem Oberbegriff des Anspruchs 1.

Es ist Aufgabe der Erfindung, die Kosten zu reduzieren und Ressourcen einzusparen. Es ist Aufgabe der Erfindung, den Spinnprozessablauf zu verbessern.

Die Aufgabe wird durch ein Hülsenmagazin mit den Merkmalen des Anspruchs 1 gelöst. Die Aufgabe wird durch eine Textilmaschine mit den Merkmalen des Anspruchs 9 gelöst. Die Aufgabe wird durch einen Maschinenkopf mit den Merkmalen des Anspruchs 10 gelöst. Die Aufgabe wird durch eine Verwendung mit den Merkmalen des Anspruchs 11 gelöst.

Vorteilhafte Ausführungsformen der Erfindung sind Gegenstand der Unteransprüche.

Die Aufgabe wird nach einem Aspekt durch ein Hülsenmagazin mit den Merkmalen des Anspruchs 1 gelöst.

Dabei weist ein Hülsenmagazin für eine Textilmaschine, insbesondere Spinnmaschine, eine Vielzahl von Halterungsvorrichtungen für Hülsen auf. Das Hülsenmagazin weist mindestens eine Markierungsvorrichtung auf. Die Markierungsvorrichtung ist ausgebildet und angeordnet, um einer Ebene, die zwischen mindestens zwei Halterungsvorrichtungen angeordnet ist, zugeordnet zu werden, derart, um die mindestens zwei Halterungsvorrichtungen je einem Bereich zuzuordnen. Dadurch kann der Prozess einer (manuellen) Zuordnung von Spulenhülsen in einem Hülsenmagazin für eine automatisierte Zuleitung zu einer Arbeitsstelle verbessert werden. Dadurch können die Kosten reduziert werden und Ressourcen können eingespart werden. Weiter kann der Spinnprozessablauf verbessert werden.

Damit die unterschiedlichen Garnpartien unterschieden werden können, können die Spulenhülsen markiert sein, insbesondere farblich gekennzeichnet sein, wobei eine Spulenhülsenmarkierung, insbesondere eine Spulenhülsenfarbe, einer Garnpartie zugeordnet werden kann. Die Spulenhülsen mit einer Spulenhülsenmarkierung, insbesondere einer Spulenhülsenfarbe, werden insbesondere den Arbeitsstellen, welche eine gleiche Garnpartie herstellen, über das Hülsenmagazin, insbesondere automatisch, zugeführt. Die automatische Zuführung wird über eine Eingabemöglichkeit an einem der Textilmaschine zugeordneten Bedienfeld sichergestellt. Das Bedienfeld ist vorzugsweise benachbart zu dem Hülsenmagazin angeordnet. Weiter bevorzugt ist das Bedienfeld an einem Gehäuseelement eines Gehäuses, welches das Hülsenmagazin zumindest begrenzt oder aufnimmt, angeordnet. Alternativ oder zusätzlich dazu kann das Bedienfeld bei einer bevorzugten Ausführungsform abseits des Hülsenmagazins in oder an einem mobilen Endgerät wie einer Smartwatch, einem Laptop, einem Tablet, einer Rechnereinheit oder einer Steuereinheit angeordnet sein, welche ausgebildet sind, definierte Steuerbefehle basierend auf der Eingabe über das Bedienfeld für die Textilmaschine zur definierten Steuerung dieser bereitzustellen. Im Sinne der vorliegenden Erfindung kann darunter ein Steuersystem mit wenigstens einer Steuereinrichtung und mit einem mit dieser Steuereinrichtung gekoppeltem Bedienfeld zur Eingabe von Befehlen verstanden werden, aus welchem die Steuereinrichtung Steuerbefehle zur Steuerung der Textilmaschine erzeugt. Die Steuereinrichtung kann dabei vorzugsweise mit einer der Textilmaschine eigenen Steuereinrichtung wie eine Zentralsteuereinrichtung oder eine Arbeitsstelleneinrichtung verbunden sein, um dieser die basierend auf der Eingabe erzeugten Steuerbefehle bereitzustellen. Gemäß der bevorzugten Ausführungsform, bei welcher das Bedienfeld benachbart zu dem Hülsenmagazin angeordnet ist, kann die Steuereinrichtung die Zentralsteuereinrichtung oder die Arbeitsstellensteuereinrichtung ausbilden. Gemäß diesen bevorzugten Ausführungsformen können definierte Bereiche des Hülsenmagazins jeweils einer mit der Textilmaschine herstellbaren Garnpartie zugeordnet werden, so dass in diesen definierten Bereichen die Spulenhülsen derjenigen Spulenhülsenmarkierung, insbesondere Spulenhülsenfarbe, die der Garnpartie zugeordnet sein werden, aufgesteckt werden können.

Der Ausdruck einer Ebene zwischen mindestens zwei Halterungsvorrichtungen, denen die Markierungsvorrichtung zugeordnet werden kann, ist dabei insbesondere als eine Ebene definiert, die beispielsweise zwei Anordnungen von Bereichen gegeneinander abgrenzt. Dabei kann es sich etwa um eine Ebene handeln, die zwischen zwei Bereichen angeordnet ist, wobei die Hülsenarten, die gleicher Art (im Sinne von identisch) sind, jeweils einen Bereich ausbilden können. Dabei kann in einer Frontansicht eines Hülsenmagazins, insbesondere in einem Maschinenkopf einer Textilmaschine, ein Bereich eine Ebene einer Hülsenanordnung ausbilden. Diese Ebene kann dabei in einem Winkel, insbesondere in einem rechten Winkel, auf eine Ebene stehen, die zwischen den Bereichen angeordnet ist. Der Begriff der Ebenen kann sich in diesem Zusammenhang insbesondere auf eine mathematische Definition einer Ebene beziehen. Die Ebenen müssen nicht (alleine oder in jeder Kombination) durch eine physisch-mechanische Repräsentation in der Textilmaschine oder einem Maschinenkopf verwirklicht sein. Sie dienen insbesondere der Zuordnung von Elementen und/oder Vorrichtungen in einer Textilmaschine bzw. einem Maschinenkopf.

Eine Markierungsvorrichtung dient dabei insbesondere als Hilfsmittel zur Kennzeichnung, in welchen Bereichen des Hülsenmagazins welche Spulenhülsen mit welcher Spulenhülsenmarkierung, insbesondere mit welcher Spulenhülsenfarbe, aufzustecken sind. Dabei kann die Markierungsvorrichtung zwischen den mindestens zwei Halterungsvorrichtungen angeordnet sein. In anderen bevorzugten Ausführungsformen kann die Markierungsvorrichtung in einem Teil der Ebene, die zwischen den beiden Halterungsvorrichtungen angeordnet ist, angeordnet sein, um den Halterungsvorrichtungen vorgelagert zu sein. Dabei kann vorgesehen sein, dass aus einer Perspektive eines Bedieners eine Abgrenzung der Bereiche in einem Aufsteckverfahren möglich ist, wobei der Bediener direkt zwischen einem Links und einem Rechts von der Halterungsvorrichtung unterscheiden kann.

In bevorzugten Ausführungsformen kann vorgesehen sein, dass die Halterungsvorrichtungen in Reihen angeordnet sind, insbesondere derart, dass eine solche Reihe einen mechanischen Zusammenhang ausbildet, etwa eine Transportvorrichtung für die Halterungsvorrichtungen entlang der Reihe (in vertikaler und/oder horizontaler Richtung). Die Ausführungen in Bezug auf die Ebene, die zwischen mindestens zwei Halterungsvorrichtungen angeordnet sein kann, eine dieser Ebene zugeordnete Markierungsvorrichtung, sowie die Anordnung von Spulenhülsen gelten in entsprechender Weise auch für die Reihen solcher Halterungsvorrichtungen fort.

Der Begriff eines Bereichs bezieht sich dabei insbesondere auf eine Anordnung von gleichartigen Spulenhülsen, die in einer Textilmaschine wenigstens einer Arbeitsstelle, wobei diese wenigstens eine Arbeitsstelle einer Sektion zugeordnet ist, zugeführt werden kann, um mit dieser wenigstens einen Arbeitsstelle bzw. Sektion eine definierte Art von Faden und/oder von Garn zu spinnen, sprich eine definierte Garnpartie herzustellen. Die Spulenhülsen können sich beispielsweise in ihrer Geometrie entsprechen, etwa in ihrem Umfang, in einer zylindrischen Form und/oder in einer Kegelstumpfform. Zusätzlich oder alternativ können sich die Spulenhülsen aber auch beispielsweise in ihrem Material entsprechen. Dabei kann vorgesehen sein, dass Spulen eines Bereichs der wenigstens einen Arbeitsstelle bzw. der Sektion der Textilmaschine zugeführt werden können, die eine definierte Garnpartie herstellen soll. Die wenigstens eine definierte Garnpartie herstellende Arbeitsstelle bzw. Sektion kann als Arbeitsbereich bezeichnet werden.

Eine Halterungsvorrichtung kann dabei insbesondere derart ausgebildet und angeordnet sein, um mindestens eine Spulenhülse aufzunehmen. Dabei kann es bevorzugte Ausführungsformen geben, in denen die Spulenhülse mit ihrer Innenseite oder einem Teil davon die Halterungsvorrichtung kontaktiert. Alternativ oder zusätzlich kann es auch bevorzugte Ausführungsformen geben, bei denen eine Außenseite (auch als Mantelfläche zu bezeichnen) oder ein Teil davon durch die Halterungsvorrichtung kontaktiert werden kann.

Eine (manuelle) Zuordnung von Spulenhülsen in einem Hülsenmagazin für eine automatisierte Zuleitung zu einer Arbeitsstelle kann verbessert werden, da eine farbliche Markierung an einem unteren Rand eines Hülsenmagazins als Hinweis dazu führen kann, dass trotz dieses Hinweises immer wieder Spulenhülsen einer Farbe in einen Bereich des Hülsenmagazins aufgesteckt werden können, welches einem anderen Arbeitsbereich zugeordnet ist, als die Farbe, der die aufgesteckte Spulenhülse zugeordnet ist. Dies tritt insbesondere bei Haltevorrichtungen, insbesondere in Form von Reihen von Aufsteckdornen, auf, welche in dem Hülsenmagazin nebeneinander angeordnet sind. Dabei kann eine definierte Anzahl an nebeneinander liegenden Haltevorrichtungen, insbesondere in Form von Reihen von Aufsteckdornen, einem Arbeitsbereich zugeordnet sein, wodurch sich ein Bereich ausbilden kann, wie er an anderer Stelle beschrieben ist. So können beispielsweise drei nebeneinander liegende Haltevorrichtungen einem ersten Arbeitsbereich zugeordnet sein, wobei eine dazu benachbarte weitere Haltevorrichtung einem anderen, zweiten Arbeitsbereich zugeordnet sein kann. So kann es passieren, dass der Bediener auf diese weitere Haltevorrichtung Spulenhülsen mit einer Spulenhülsenmarkierung, insbesondere mit einer Spulenfarbe, aufsteckt, welche dem ersten Arbeitsbereich zuzuordnen ist. Die hier vorgeschlagene Markierungsvorrichtung kann dabei insbesondere derart ausgebildet sein, dass ein Bediener in einem Bedienverfahren die Markierungsvorrichtung wahrnehmen kann, insbesondere visuell wahrnehmen kann, insbesondere in einer Aufsteckhöhe. Dabei kann etwa in einem Verfahrensschritt eines Aufsteckens der Spulenhülsen in definierter Weise ein Zuordnen zu den Bereichen, zu denen sie "gehören", erfolgen. Dabei kann eine kontinuierliche Kontrollfunktion durch den Bediener durchgeführt werden, während er die Spulenhülsen den jeweiligen Bereichen zuordnet.

Nach einem bevorzugten Aspekt kann mindestens eine der folgenden Anordnungen als Anordnung der mindestens einen Markierungsvorrichtung ausgebildet sein. Es kann die mindestens eine Markierungsvorrichtung in einer vertikalen Richtung in einer Ebene, die zwischen zwei Reihen von Halterungsvorrichtungen verläuft, angeordnet sein. Alternativ oder zusätzlich kann die mindestens eine Markierungsvorrichtung in einer horizontalen Richtung in einer Ebene, die zwischen zwei Reihen von Halterungsvorrichtungen verläuft, angeordnet sein. Dadurch kann in einfacher Weise eine Markierungsvorrichtung angeordnet werden, die es erlaubt, dass die Bereiche gegeneinander abgegrenzt werden können, insbesondere visuell. Dadurch kann eine kontinuierliche Kontrollfunktion durch den Bediener durchgeführt werden, während er die Spulenhülsen den jeweiligen Bereichen zuordnet. Insbesondere kann der Bediener bei einem Aufsteckschritt ein Links von einem Rechts zur Markierungsvorrichtung wahrnehmen und in den Entscheidungsprozess einbeziehen. Dadurch kann der Prozess einer (manuellen) Zuordnung von Spulenhülsen in einem Hülsenmagazin für eine automatisierte Zuleitung zu einer Arbeitsstelle verbessert werden. Dadurch können die Kosten reduziert werden und Ressourcen können eingespart werden. Weiter kann der Spinnprozessablauf verbessert werden.

Die horizontale bzw. die vertikale Richtung (auch als horizontale bzw. vertikale Anordnung zu bezeichnen) sind dabei insbesondere in Bezug auf eine Aufstellung einer Textilmaschine definiert. Dabei kann eine Horizontalrichtung insbesondere in Form einer Breite oder Tiefe der Textilmaschine definiert sein. Alternativ oder zusätzlich kann eine Vertikalrichtung in Form einer Höhe einer Textilmaschine definiert sein.

Nach einem bevorzugten Aspekt kann die mindestens eine Markierungsvorrichtung als flexible Markierungsvorrichtung ausgebildet sein. Alternativ oder zusätzlich kann die mindestens eine Markierungsvorrichtung als starre Markierungsvorrichtung ausgebildet sein. Dadurch kann die Struktur der Markierungsvorrichtung an die Gegebenheiten am Hülsenmagazin angepasst ausgebildet sein.

Erfindungsgemäß ist die mindestens eine Markierungsvorrichtung ausgebildet, um in Halterungen im Hülsenmagazin eingesetzt zu werden. Dadurch kann die mindestens eine Markierungsvorrichtung angeordnet werden. Dabei kann die Notwendigkeit insbesondere weitgehender struktureller Änderungen an der Textilmaschine oder am Maschinenkopf vermieden werden, um eine Markierungsvorrichtung anzuordnen. Die Halterungen im Hülsenmagazin können dabei ausgebildet sein, um die Markierungsvorrichtungen an der Textilmaschine anzuordnen. Dabei können insbesondere Arretiervorrichtungen ausgebildet sein - insbesondere an der Markierungsvorrichtung, wie auch insbesondere entsprechende Gegenstücke an dem Hülsenmagazin, der Textilmaschine und/oder einem Maschinenkopf, wie an anderer Stelle beschrieben - an denen die Markierungsvorrichtungen angeordnet werden können. Arretiervorrichtungen können beispielsweise ausgewählt sein aus Schrauben, Nägeln, Nieten, Haken, Ösen und/oder entsprechenden Gegenstücken an dem Hülsenmagazin, der Textilmaschine, dem Maschinenkopf und/oder an der Markierungsvorrichtung.

Eine Markierungsvorrichtung kann direkt einer Halterungsvorrichtung zugeordnet werden. Es kann bevorzugte Ausführungsformen geben, in denen die Markierungsvorrichtung ausgebildet ist, um mit einer Halterungsvorrichtung derart verbunden zu werden, um die Markierungsvorrichtung mit einer Transportvorrichtung, insbesondere in einer vertikalen bzw. einer horizontalen Richtung, zu verbinden.

Nach einem bevorzugten Aspekt kann die Markierungsvorrichtung einen Indikator, insbesondere eine Farbmarkierung, aufweisen. Dieser Indikator kann zu einem Indikator, insbesondere in Form einer Farbmarkierung, korrespondieren, der einer in mindestens einem der Bereiche anzuordnenden Spulenhülsenart zugeordnet ist. Dabei kann ein Zuordnen direkt einem Anordnen an einer Halterungsvorrichtung entsprechen. Alternativ oder zusätzlich kann eine Markierungsvorrichtung vorgesehen sein, die, wie bereits an anderer Stelle beschrieben, an einem Hülsenmagazin und/oder an einem Maschinenkopf (wie an anderer Stelle beschrieben) angeordnet sein kann.

Dabei sind insbesondere mindestens zwei verschiedene Funktionen durch eine Markierungsvorrichtung, wie hier und an anderer Stelle beschrieben, ausgebildet. Eine erste bevorzugte Funktion stellt dabei insbesondere eine Kenntlichmachung einer Abtrennung bzw. Abgrenzung der Bereiche zueinander her. Dabei kann insbesondere ein erster Bereich von einem zweiten Bereich abgegrenzt werden. Dabei kann die Abgrenzung mechanisch sein, etwa durch ein Einziehen von Trennstrukturen und/oder Trennvorrichtungen, wie an anderer Stelle beschrieben. Alternativ oder zusätzlich können Markierungsvorrichtungen ausgebildet sein, um eine Abgrenzung visuell anzudeuten. Als zweite bevorzugte Funktion kann vorgesehen sein, dass eine Art einer Spulenhülse in mindestens einem der Bereiche angegeben werden kann. Dabei kann etwa ein Indikator auf eine Konfiguration von Spulenhülsen verweisen, die in dem mindestens einen Bereich anzuordnen sind. Dabei kann der Indikator auch insbesondere eine Information übermitteln, welche Spulenhülsenart in dem mindestens einen Bereich anzuordnen ist.

Nach einem bevorzugten Aspekt kann die mindestens eine Markierungsvorrichtung mindestens eines der Folgenden aufweisen, ein Band, insbesondere einen Expander, eine Leiste, eine Kette, eine Stange und/oder ein Blech, insbesondere eine Trennwand. Dadurch kann mindestens eine der verschiedenen Funktionen ausgebildet werden, die in Bezug auf die Markierungsvorrichtung an anderer Stelle beschrieben sind.

Ein Band kann dabei insbesondere eine flexible Form einer Markierungsvorrichtung sein. Dabei kann das Band aus einem Gummi und/oder einem Plastik ausgebildet sein. Alternativ oder zusätzlich kann aber auch ein Band aus einem Material wie etwa einem Textil ausgebildet sein.

Dabei kann das Textil aus Fäden eines Garns und/oder aus Fäden eines Metalls gesponnen sein. Ein Expander kann dabei insbesondere ein elastisches Band sein, welches sich in der Länge ziehen lässt und automatisch zu seiner ursprünglichen Länge zurückkehrt, wodurch es zwischen zwei Arretiervorrichtungen, wie an anderer Stelle beschrieben, angeordnet werden kann. Dabei ist eine Anordnung besonders einfach zu ermöglichen, wodurch ein Wechsel schnell ausgeführt werden kann. Ein Band kann dabei mindestens einen Indikator aufweisen, wie er an anderer Stelle beschrieben ist.

Eine Leiste kann dabei insbesondere ein Beispiel einer starren Markierungsvorrichtung sein. Dabei kann eine Leiste stabiler sein, wie etwa ein Band, wodurch auch bei stärkerer Belastung eine Anordnung stabil bleibt, etwa wenn ein Bediener beim Aufstecken der Spulenhülsen dagegen stößt. Eine Leiste kann dabei mindestens einen Indikator aufweisen, wie er an anderer Stelle beschrieben ist.

Eine Kette kann dabei insbesondere ausgebildet sein, um die Eigenschaften einer starren Markierungsvorrichtung mit den Eigenschaften einer flexiblen Markierungsvorrichtung zu kombinieren. Dabei kann die Kette insbesondere gespannt oder nicht gespannt (wie etwa ein Expander) werden sowie weiterhin alternativ oder zusätzlich in einer Breiten- oder Tiefenrichtung der Textilmaschine eine gewisse Flexibilität aufweisen. An der Kette kann mindestens ein Indikator angeordnet werden, wie er an anderer Stelle beschrieben ist.

Eine Stange und/oder ein Blech, insbesondere eine Trennwand, kann/können dabei ausgebildet sein, um eine mechanische Abtrennung auszubilden, als Beispiel einer starren Form einer Markierungsvorrichtung. Dabei kann eine Stange und/oder ein Blech, insbesondere eine Trennwand, Indikatoren aufweisen, wie sie an anderer Stelle beschrieben sind.

Nach einem bevorzugten Aspekt kann die Markierungsvorrichtung einen Indikator aufweisen, insbesondere wie schon an anderer Stelle angeklungen. Ein Indikator kann insbesondere eine Farbmarkierung aufweisen. Der Indikator an der Markierungsvorrichtung kann zu einem Indikator einer in mindestens einem der Bereiche anzuordnenden Hülsenart korrespondieren. Der korrespondierende Indikator, der der Spulenhülse zugeordnet sein kann, ist insbesondere in Form einer Farbmarkierung ausgebildet. Dabei kann der entsprechende Indikator an der Markierungsvorrichtung, insbesondere die entsprechende Farbmarkierung, in Richtung des jeweiligen Bereichs des Spulenhülsenmagazins weisen, in welchem die Spulenhülsen mit einem entsprechenden korrespondierenden Indikator anzuordnen sind. Hier wird insbesondere auf die Vorteile und Eigenschaften des Indikators verwiesen, wie er an anderer Stelle beschrieben ist. Dabei wird auf eine Wiederholung von Textpassagen aus Gründen der Lesbarkeit und der Kompaktheit verzichtet.

Nach einem bevorzugten Aspekt kann die Markierungsvorrichtung derart ausgebildet sein, um auf einer Anordnungshöhe angeordnet zu sein. Dadurch kann eine Zuordnung der Markierungsvorrichtung zu einer Anordnung der Spulenhülse erfolgen. Dadurch kann eine Zuweisung hervorgehoben werden, was es einem Bediener erleichtert, die Zuordnung richtig einzuordnen und die richtigen Spulen anzuordnen.

Eine Anordnungshöhe kann insbesondere eine Aufsteckhöhe sein. Eine Aufsteckhöhe entspricht dabei insbesondere einer Anordnungshöhe (insbesondere in einem voll aufgesteckten Zustand) in bevorzugten Ausführungsformen, in denen die Halterungsvorrichtung insbesondere ein Aufstecken von Spulenhülsen ermöglicht, wie an anderer Stelle beschrieben.

Unter Anordnungshöhe kann insbesondere ein Abstand einer Halterungsvorrichtung zu einem Boden bei einer aufgestellten Textilmaschine verstanden werden. Dabei kann die Markierungsvorrichtung also entweder fixiert angeordnet sein, etwa in bevorzugten Ausführungsformen, in denen sich immer wieder die gleichen Spulen in einer Anordnung eines Bereichs wiederholen. Es kann aber auch bevorzugte Ausführungsformen geben, bei denen etwa ein Bereich seine Funktion wechselt. Dabei kann sich insbesondere eine Markierungsvorrichtung mit einer Halterungsvorrichtung für Spulenhülsen mitbewegen, wenn sich diese Halterungsvorrichtungen bewegen, wie an anderer Stelle beschrieben.

Die Markierungsvorrichtung kann insbesondere in ein Sichtfeld eines Bedieners ragen. Dabei kann eine durchschnittliche Größe eines Bedieners, insbesondere bei entspannter Körperhaltung, den Angaben der gängigen Arbeitssicherheit in Deutschland und/oder der EU folgen, wie zum Anmeldetag bzw. zum Prioritätstag beschrieben. Dabei kann auch insbesondere von einer entspannten Augenhaltung (Geradeausblick) ausgegangen werden.

Nach einem bevorzugten Aspekt kann mindestens eine Beispielhülse als eine weitere Markierungsvorrichtung einem Bereich zugeordnet werden. Dies kann insbesondere unterhalb und/oder oberhalb des mindestens einen Bereichs sein, wie er an anderer Stelle beschrieben ist.

Dadurch kann eine Visualisierung einer Beispielhülse als direkter Vergleich ausgebildet werden. Dadurch kann es einem Bediener weiter erleichtert werden, die aufzusteckenden Spulenhülsen mit der weiteren Markierungsvorrichtung (auch als Attrappe zu bezeichnen) abzugleichen.

Nach einem unabhängigen Aspekt wird die Aufgabe insbesondere durch eine Textilmaschine gemäß Anspruch 9 gelöst. Diese weist ein Hülsenmagazin auf, wie es an anderer Stelle beschrieben ist. Die Textilmaschine kann durch die Merkmale, Eigenschaften und Vorteile des Hülsenmagazins beschrieben werden. Auf diese Ausführungen wird in diesem Zusammenhang verwiesen, und auf eine Wiederholung der zugehörigen Textpassagen wird aus Gründen der Kompaktheit und der Lesbarkeit verzichtet. Die Textilmaschine kann durch die Merkmale, Eigenschaften und Vorteile eines Maschinenkopfs, wie an anderer Stelle ausgeführt, beschrieben werden. Die Textilmaschine kann durch die Merkmale, Eigenschaften und Vorteile einer Verwendung, wie an anderer Stelle ausgeführt, beschrieben werden.

Die Textilmaschine kann insbesondere eine Spinnmaschine sein. Die Spinnmaschine kann dabei eine Rotorspinnmaschine oder eine Luftspinnmaschine sein. Die Spinnmaschine kann in bevorzugter Weise eine Vielzahl von Arbeitsstellen aufweisen. Diese können in Sektionen angeordnet oder unterteilt sein, wobei insbesondere wenigstens eine Arbeitsstelle einer Sektion zugeordnet ist. Dabei kann die wenigstens eine Arbeitsstelle bzw. Sektion ausgebildet sein, wie an anderer Stelle beschrieben, eine definierte Art von Faden/Garn zu spinnen, sprich eine definierte Garnpartie herzustellen. Die wenigstens eine definierte Garnpartie herstellende Arbeitsstelle bzw. Sektion kann als Arbeitsbereich bezeichnet werden. Das Hülsenmagazin kann insbesondere in einem Maschinenkopf angeordnet sein. Vorzugsweise ist in einem Hülsenmagazin ein entsprechender Bereich ausgebildet, um die Spulenhülsen aufzunehmen, die einem solchen Arbeitsbereich zugeführt werden können. Es können mehrere Arbeitsbereiche an einer Textilmaschine ausgebildet sein, um mehrere Arten von Fäden bzw. Garnen zu spinnen. Dadurch können mehrere Bereiche in einem Hülsenmagazin ausgebildet sein.

Nach einem unabhängigen Aspekt wird die Aufgabe insbesondere durch einen Maschinenkopf einer Textilmaschine gemäß Anspruch 10 gelöst. Die Textilmaschine ist dabei insbesondere ausgebildet, wie an anderer Stelle beschrieben. Der Maschinenkopf weist dabei ein Hülsenmagazin, wie es an anderer Stelle beschrieben ist, auf. Der Maschinenkopf ist dabei insbesondere an einer Stirnseite einer Textilmaschine ausgebildet. Die Textilmaschine kann somit durch Ihren Aufbau einen Verfahrensablauf des Spinnens mindestens eine definierte Art Faden oder eine definierte Art Garn nachbilden. Der Maschinenkopf der Textilmaschine kann durch die Merkmale, Eigenschaften und Vorteile des Hülsenmagazins beschrieben werden. Auf diese bevorzugten Ausführungen wird in diesem Zusammenhang verwiesen und auf eine Wiederholung der zugehörigen Textpassagen wird aus Gründen der Kompaktheit und der Lesbarkeit verzichtet. Der Maschinenkopf kann durch die Merkmale, Eigenschaften und Vorteile der Textilmaschine, wie an anderer Stelle ausgeführt, beschrieben werden. Der Maschinenkopf kann durch die Merkmale, Eigenschaften und Vorteile einer Verwendung, wie an anderer Stelle ausgeführt, beschrieben werden.

Nach einem unabhängigen Aspekt wird die Aufgabe insbesondere durch eine Verwendung eines Hülsenmagazins, wie an anderer Stelle beschrieben, einer Textilmaschine, wie an anderer Stelle beschrieben und/oder eines Maschinenkopfs, wie an anderer Stelle beschrieben, gemäß Anspruch 11 gelöst. Dabei werden mindestens zwei Spulenhülsen zweier Spulenhülsenarten je einem Bereich zugeordnet. Dabei werden die Bereiche durch eine Markierungsvorrichtung markiert. Dabei ist die Markierungsvorrichtung ausgebildet und angeordnet, um einer Ebene zwischen den mindestens zwei Halterungsvorrichtungen zugeordnet zu werden, derart, um die mindestens zwei Halterungsvorrichtungen dem je einen Bereich zuzuordnen. Die Verwendung des Hülsenmagazins, der Textilmaschine und/oder des Maschinenkopfs kann durch die Merkmale, Eigenschaften und Vorteile des Hülsenmagazins, der Textilmaschine und/oder des Maschinenkopfs beschrieben werden. Auf diese bevorzugten Ausführungen wird in diesem Zusammenhang verwiesen, und auf eine Wiederholung der zugehörigen Textpassagen wird aus Gründen der Kompaktheit und der Lesbarkeit verzichtet.

Zusammenfassend und in anderen Worten heißt das, dass bei Auflaufspulen herstellenden Textilmaschinen, insbesondere Rotor- und Luftspinnmaschinen, den einzelnen Arbeitsstellen (Spinnstellen) Spulenhülsen zuführbar sein können, um auf diese das erzeugte Garn bzw. den erzeugten Faden, insbesondere kreuzweise, aufzuspulen. Solche Spulenhülsen werden insbesondere in Hülsenmagazinen der Textilmaschine beispielsweise auf sogenannten Aufsteckdornen als Halterungsvorrichtungen zur automatischen Zufuhr zur Arbeitsstelle bevorratet. Diese Hülsenmagazine sind insbesondere maschinenendseitig - etwa in einem Maschinenkopf - angeordnet.

Die Textilmaschinen sind insbesondere in der Lage, Mehrpartien herzustellen. Mit anderen Worten können auf einer einzigen Textilmaschine, insbesondere auf einer Längsseite der Textilmaschine, unterschiedliche Garnpartien (Arten von Garn) hergestellt werden. Eine Garnpartie zeichnet sich dabei insbesondere dadurch aus, dass diese ein Garn mit definierten Garneigenschaften aufweist, so dass Garne unterschiedlicher Garnpartien zueinander unterschiedliche Garneigenschaften haben können.

Damit die unterschiedlichen Garnpartien in bevorzugter Weise visuell unterschieden werden können, können die Spulenhülsen gekennzeichnet sein. In bevorzugten Ausführungsformen kann eine solche Spulenhülsenmarkierung eine farbliche Kennzeichnung sein, wobei eine Spulenhülsenfarbe einer Garnpartie zugeordnet werden kann.

Die Spulenhülsen einer Farbe werden insbesondere den Arbeitsstellen, welche eine gleiche Garnpartie herstellen, über das Hülsenmagazin zugeführt. Dabei sind definierte Bereiche des Hülsenmagazins jeweils einer Garnpartie zugeordnet, so dass in diesen definierten Bereichen die Spulenhülsen derjenigen Farbe, die der Garnpartie zugeordnet sind, aufzustecken sind. Dabei kann wenigstens eine Arbeitsstelle, weiter bevorzugt können mehrere Arbeitsstellen, zu einem Arbeitsbereich angeordnet sein, wobei wenigstens eine Arbeitsstelle eine Sektion ausmachen kann, wobei mehrere Arbeitsstellen vorzugsweise in verschiedene Sektionen der Textilmaschine unterteilt sind. Der Arbeitsbereich kann dabei insbesondere derart ausgebildet sein, dass die wenigstens eine darin angeordnete Arbeitsstelle bzw. die wenigstens eine Sektion zur Ausbildung einer definierten Garnpartie ausgebildet bzw. eingerichtet ist.

Die Spulenhülsen können von einem Bediener manuell in den jeweiligen Bereich des Hülsenmagazins aufgesteckt werden. Dabei kann es trotz Hilfsmitteln zur Kennzeichnung, etwa der farblichen Markierung der Spulenhülsen und/oder einer farblichen Markierung auf einer Unterseite des Hülsenmagazins, in welchen Bereichen des Hülsenmagazins welche Spulenhülsenfarben aufzustecken sind, zu fehlerhaftem Aufstecken kommen.

Mit anderen Worten können trotz Hinweisen immer wieder Spulenhülsen einer Farbe in einen Bereich des Hülsenmagazins aufgesteckt werden, obwohl diese Farbe einem anderen Arbeitsbereich als dem der aufgesteckten Spulenhülse zugeordnet ist. Dies tritt insbesondere bei Reihen von Halterungsvorrichtungen, etwa in Form von Reihen von Aufsteckdornen, auf, welche in dem Hülsenmagazin nebeneinander angeordnet sind, wobei eine definierte Anzahl an nebeneinander liegenden Reihen, insbesondere von Aufsteckdornen, einem Arbeitsbereich zugeordnet sein können. So können beispielsweise drei nebeneinander liegende Reihen, insbesondere von Aufsteckdornen, einem ersten Arbeitsbereich zugeordnet sein, wobei eine dazu benachbarte weitere Reihe, insbesondere von Aufsteckdornen, einem anderen, zweiten Arbeitsbereich zugeordnet sein kann. So kann es passieren, dass der Bediener auf diese weitere Reihe, insbesondere von Aufsteckdornen, Spulenhülsen mit einer Farbe aufsteckt, welche einem anderen Arbeitsbereich zugeordnet ist.

Durch ein Anordnen von flexiblen oder starren, visuellen Markierungsvorrichtungen (auch als Trennungen zu bezeichnen) zwischen den Bereichen des Hülsenmagazins kann die Zuordnung der Bereiche kenntlich gemacht werden und kann es einem Bediener erleichtern, Spulenhülsen entsprechend richtig zu- und anzuordnen. Bei den Markierungsvorrichtungen kann es sich um starre Leisten oder flexible Bänder wie Expander handeln. Die Markierungsvorrichtungen werden insbesondere endseitig in vorgesehenen Halterungen im Hülsenmagazin eingesetzt. Dadurch wird der Bediener beim Aufstecken der Spulenhülsen insbesondere optisch angehalten, die Spulenhülse einer gleichen Farbe nur in den Bereich des Hülsenmagazins aufzustecken, welcher auf einer Seite der Markierungsvorrichtung(en) liegt.

Die Markierungsvorrichtung kann in bevorzugten Ausführungsformen dabei der Spulenhülsenfarbe entsprechende farbliche Indikatoren aufweisen, wobei diese Indikatoren derart angeordnet sein können, dass diese in Richtung des jeweiligen Bereiches des Hülsenmagazins weisen, in welchen Spulenhülsen mit einer der Indikatorfarbe gleichen Farbe aufzustecken sind.

Nachfolgend werden bevorzugte Ausführungsbeispiele unter Bezugnahme auf Figuren näher beschrieben, dabei zeigen schematisch und beispielhaft:
- Fig. 1: in schematischer Darstellung eine bevorzugte Ausführungsform eines Maschinenkopfs einer Textilmaschine;
- Fig. 2: in schematischer Darstellung einen Ausschnitt einer bevorzugten Ausführungsform eines Hülsenmagazins; und
- Fig. 3: in schematischer Darstellung einen Ausschnitt einer weiteren bevorzugten Ausführungsform eines Hülsenmagazins.

Für gleichwirkende und/oder gleichartige Elemente und Strukturen werden die gleichen Bezugszeichen verwendet.

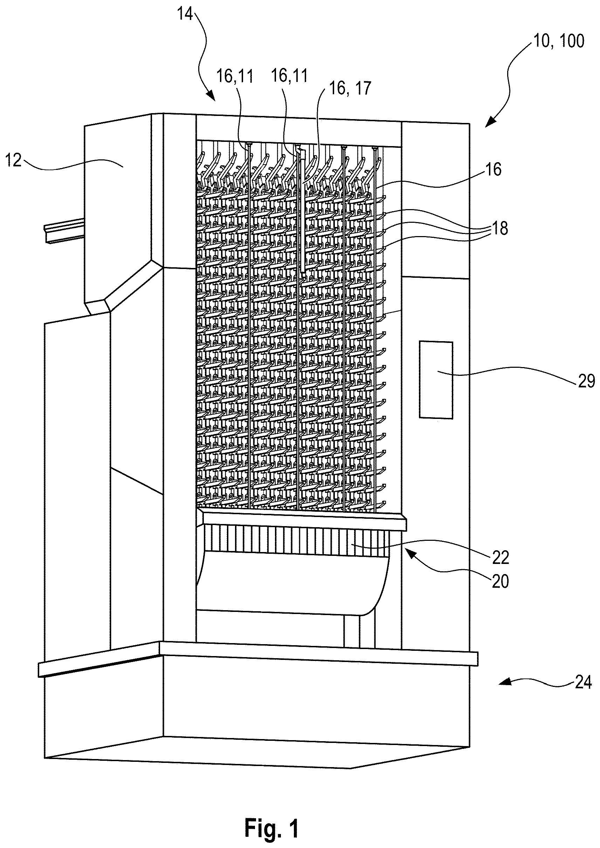

In Fig. 1 wird eine exemplarische Ausführungsform eines Maschinenkopfs 10 einer Textilmaschine 100 gezeigt. Dabei bildet ein Maschinenkopf 10 insbesondere eine Stirnseite der Textilmaschine 100 aus, an die Arbeitsbereiche (nicht gezeigt) in bekannter Weise angeordnet sind.

Dem Maschinenkopf 10 ist ein Hülsenmagazin 14 zugeordnet. Die Zuordnung kann dabei insbesondere durch ein Anordnen des Hülsenmagazins 14 in diesem Maschinenkopf 10 ausgebildet sein. Dabei kann ein Gehäuse 12 ausgebildet werden, um darin ein Hülsenmagazin 14 anzuordnen. Die Textilmaschine 100 bzw. der Maschinenkopf 10 sind auf einer Basis 24 angeordnet. Dadurch wird der Struktur insbesondere Stabilität verliehen.

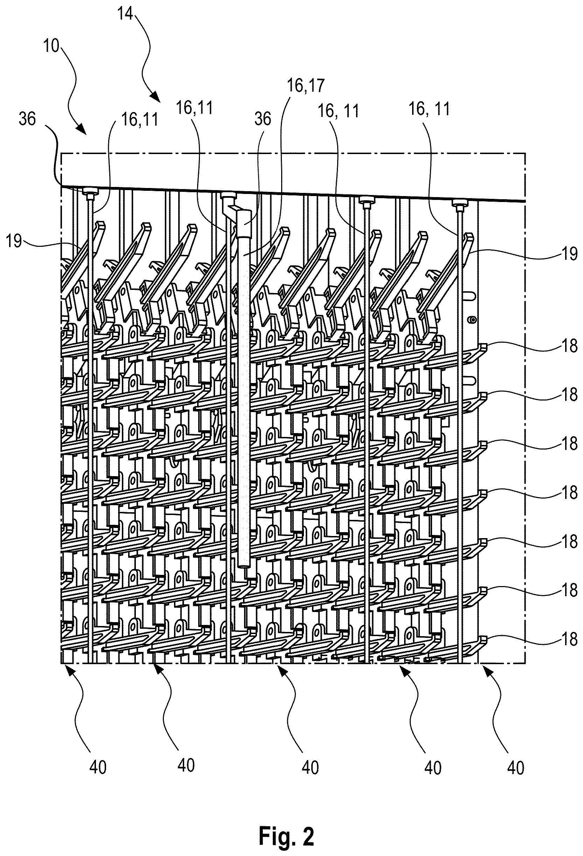

Das Hülsenmagazin 14 für die Textilmaschine 100 weist eine Vielzahl von Halterungsvorrichtungen 18 für Spulenhülsen (nicht gezeigt) auf. Dabei ist mindestens eine Markierungsvorrichtung 16 vorgesehen. Diese Markierungsvorrichtung 16 ist ausgebildet und angeordnet, um einer Ebene zwischen mindestens zwei Halterungsvorrichtungen 18 zugeordnet zu werden. Diese Ebene liegt hier beispielsweise als imaginäre Ebene zwischen den Halterungsvorrichtungen 18. Die Halterungsvorrichtungen 18 sind hier als Aufsteckdornen 19 ausgebildet, wie diese im Detail in der Fig. 2 gezeigt sind. Die Zuordnung ist dabei derart, um die mindestens zwei Halterungsvorrichtungen 18 je einem Bereich 40 zuzuordnen.

Die Markierungsvorrichtungen 16 sind insbesondere ausgebildet, um in einer vertikalen Richtung zwischen einer Reihe von Halterungsvorrichtungen 18 zu verlaufen. Die Markierungsvorrichtung 16 verläuft insbesondere über die gesamte Höhe des Hülsenmagazins 14 und ist damit insbesondere derart ausgebildet, um auf einer Anordnungshöhe in ein Sichtfeld eines Bedieners (nicht gezeigt) zu ragen.

In den in Figuren 1 bis 3 gezeigten Ausführungsformen sind zwei Arten von Markierungsvorrichtungen 16 gezeigt. Diese können zusammen (wie hier gezeigt) oder auch getrennt voneinander zum Einsatz kommen. Dabei kann es sich um eine flexible Markierungsvorrichtung 11 oder um eine starre Markierungsvorrichtung 17 handeln. Beide Arten von Markierungsvorrichtungen 11, 17 sind dabei in Halterungen 36 im Hülsenmagazin 14 eingesetzt. Diese Halterungen 36 können an die Markierungsvorrichtung 16 angepasst sein.

Beim Einsetzen kann es sich um ein Einspannen, insbesondere bei den flexiblen Markierungsvorrichtungen 11, handeln. Die starren Markierungsvorrichtungen 17 können in die Halterung 36 eingesteckt, aufgesteckt und/oder eingeschraubt sein. Beispiele von Markierungsvorrichtungen 16 können ein Band, insbesondere ein Expander, eine Leiste, eine Kette, eine Stange und/oder ein Blech, insbesondere eine Trennwand, sein.

Die Markierungsvorrichtung 16 können einen Indikator (nicht gezeigt), insbesondere eine Farbmarkierung, aufweisen, die zu einem Indikator (nicht gezeigt) korrespondieren, insbesondere einer Farbmarkierung, der einer in mindestens einem der Bereiche 40 anzuordnenden Spulenhülsenart zugeordnet wird. Dabei kann der entsprechende Indikator, insbesondere die entsprechende Farbmarkierung, in Richtung des jeweiligen Bereichs 40 des Hülsenmagazins 14 weisen, in welchem die Spulenhülsen mit einem entsprechenden Indikator anzuordnen sind.

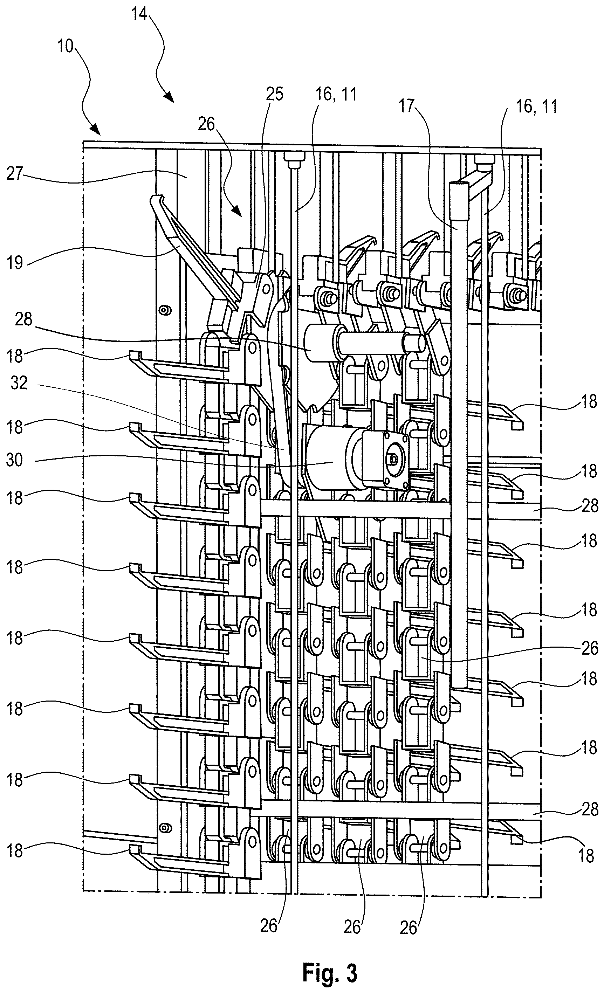

Fig. 2 zeigt dabei insbesondere in einer schematischen Darstellung einen Ausschnitt einer Ausführungsform eines Hülsenmagazins 14. Dabei werden Aufsteckdornen 19 als Halterungsvorrichtung 18 in Reihen auf einer Kette 26 angeordnet, wie dies in der Fig. 3 im weiteren Detail gezeigt ist. Dabei wird eine Kette 26 insbesondere aus einer Reihe voneinander verkippbaren Kettengliedern 25 ausgebildet. Fig. 2 zeigt dabei insbesondere eine Reihe von vertikal verlaufenden Ketten 26, die nebeneinander angeordnet sind, um die Aufsteckdorne 19 als Halterungsvorrichtungen 18 im Hülsenmagazin 14 anzuordnen. Fig. 3 zeigt dabei insbesondere einen Ausschnitt einer Ausführungsform eines Hülsenmagazins 14, bei dem ein Teil der Ketten 26 ausgeblendet ist, um die Funktionsweise zu erklären. Die Ketten 26 laufen dabei insbesondere über Umlenkrollen (nicht dargestellt). Dabei werden die Umlenkrollen über einen Riemen 32 mit einem Motor 30 mechanisch verbunden, um die Ketten 26 in eine Bewegung versetzen zu können. Dadurch können insbesondere Spulenhülsen nachgeliefert werden, bei Bedarf in einem Arbeitsbereich (nicht gezeigt) der Textilmaschine 100. Die Gesamtstruktur kann dabei durch Stützstrukturen 27 sowie durch Querstreben 28 stabilisiert werden.

Ein Hülsenmagazin 14 wie hier und an anderer Stelle beschrieben kann in einer Textilmaschine 100 und/oder in einem Maschinenkopf 10 verwendet werden, um mindestens zwei Spulenhülsen zweier Spulenhülsenarten je einem Bereich 40 durch eine Markierungsvorrichtung 16 zuzuordnen. Dabei werden die Bereiche 40 durch eine Markierungsvorrichtung 16 markiert. Die Markierungsvorrichtung 16 ist dabei ausgebildet und angeordnet, um einer Ebene zwischen den mindestens zwei Halterungsvorrichtungen 18 zugeordnet zu werden, derart, um die mindestens zwei Halterungsvorrichtungen 18 dem je einen Bereich 40 zuzuordnen.

### Bezugszeichenliste

- 10: Maschinenkopf
- 11: flexible Markierungsvorrichtung
- 12: Gehäuse
- 14: Hülsenmagazin
- 16: Markierungsvorrichtung
- 17: starre Markierungsvorrichtung
- 18: Halterungsvorrichtung
- 19: Aufsteckdornen
- 20: untere Verblendung
- 22: weitere Markierungsvorrichtung
- 24: Basis
- 25: Kettenglied
- 26: Kette
- 27: Stützstruktur
- 28: Querstrebe
- 29: Bedienpanel
- 30: Motor
- 32: Riemen
- 36: Halterung
- 40: Bereich
- 100: Textilmaschine

## Patentansprüche

1. Hülsenmagazin (14) für eine Textilmaschine (100), insbesondere Spinnmaschine, aufweisend:
- eine Vielzahl von Halterungsvorrichtungen (18) jeweils zur Aufnahme einer Spulenhülse;
- mindestens eine Markierungsvorrichtung (16),
wobei die mindestens eine Markierungsvorrichtung (16) ausgebildet und angeordnet ist, um einer Ebene, die zwischen mindestens zwei Halterungsvorrichtungen (18) angeordnet ist, zugeordnet zu werden, derart, um die mindestens zwei Halterungsvorrichtungen (18) je einem Bereich (40) zuzuordnen
**dadurch gekennzeichnet, dass**
die mindestens eine Markierungsvorrichtung (16) ausgebildet ist, um in Halterungen (36) im Hülsenmagazin (14) einsetzbar zu sein.

2. Hülsenmagazin (14) nach Anspruch 1, **dadurch gekennzeichnet, dass** mindestens eine der folgenden Anordnungen als Anordnung der mindestens einen Markierungsvorrichtung (16) ausgebildet ist:
wobei die mindestens eine Markierungsvorrichtung (16) in einer vertikalen Richtung in einer Ebene, die zwischen zwei Reihen von Halterungsvorrichtungen (18) verläuft, angeordnet ist; oder
wobei die mindestens eine Markierungsvorrichtung (16) in einer horizontalen Richtung in einer Ebene, die zwischen zwei Reihen von Halterungsvorrichtungen (18) verläuft, angeordnet ist.

3. Hülsenmagazin (14) nach einem der Ansprüche 1 oder 2, **dadurch gekennzeichnet, dass** die mindestens eine Markierungsvorrichtung (16) als flexible Markierungsvorrichtung (11) ausgebildet ist; oder
wobei die mindestens eine Markierungsvorrichtung (16) als starre Markierungsvorrichtung (17) ausgebildet ist.

4. Hülsenmagazin (14) nach einem der voranstehenden Ansprüche, **dadurch gekennzeichnet, dass** die mindestens eine Markierungsvorrichtung (16) einen Indikator, insbesondere eine Farbmarkierung, aufweist, korrespondierend zu einem Indikator, insbesondere einer Farbmarkierung, einer in mindestens einem der Bereiche (40) anzuordnenden Spulenhülsenart.

5. Hülsenmagazin (14) nach einem der voranstehenden Ansprüche, **dadurch gekennzeichnet, dass** die mindestens eine Markierungsvorrichtung (16) mindestens eines der Folgenden aufweist:
- ein Band, insbesondere einen Expander;
- eine Leiste;
- eine Kette;
- eine Stange; und
- ein Blech, insbesondere eine Trennwand.

6. Hülsenmagazin (14) nach einem der voranstehenden Ansprüche, insbesondere nach einem der Ansprüche 4 oder 5, **dadurch gekennzeichnet, dass** die mindestens eine Markierungsvorrichtung (16) einen Indikator, insbesondere eine Farbmarkierung, aufweist, korrespondierend zu einem Indikator, insbesondere einer Farbmarkierung, einer in mindestens einem der Bereiche (40) anzuordnenden Spulenhülsenart, wobei der entsprechende Indikator, insbesondere die entsprechende Farbmarkierung, in Richtung des jeweiligen Bereichs (40) des Hülsenmagazins (14) weist, in welchem die Spulenhülsen mit einem entsprechenden Indikator anzuordnen sind.

7. Hülsenmagazin (14) nach einem der voranstehenden Ansprüche, **dadurch gekennzeichnet, dass** die mindestens eine Markierungsvorrichtung (16) derart ausgebildet ist, um auf einer Anordnungshöhe, insbesondere einer Aufsteckhöhe, angeordnet zu sein, insbesondere um in ein Sichtfeld eines Bedieners zu ragen.

8. Hülsenmagazin (14) nach einem der voranstehenden Ansprüche, **dadurch gekennzeichnet, dass** mindestens eine Beispielhülse einem Bereich (40) zugeordnet wird.

9. Textilmaschine (100) aufweisend ein Hülsenmagazin (14) nach einem der voranstehenden Ansprüche.

10. Maschinenkopf (10) einer Textilmaschine (100), insbesondere nach Anspruch 9, **dadurch gekennzeichnet, dass** der Maschinenkopf (10) ein Hülsenmagazin (14) nach einem der Ansprüche 1 bis 8 aufweist.

11. Verwendung eines Hülsenmagazins (14) nach einem der Ansprüche 1 bis 8, einer Textilmaschine (100) nach Anspruch 9 und/oder eines Maschinenkopfs (10) nach Anspruch 10, **dadurch gekennzeichnet, dass** mindestens zwei Spulenhülsen zweier Spulenhülsenarten je einem Bereich (40) zugeordnet werden, wobei die Bereiche durch eine Markierungsvorrichtung (16) markiert werden, wobei die Markierungsvorrichtung (16) ausgebildet und angeordnet ist, um einer Ebene zwischen den mindestens zwei Halterungsvorrichtungen (18) zugeordnet zu werden, derart, um die mindestens zwei Halterungsvorrichtungen (18) dem je einen Bereich (40) zuzuordnen.

## Claims

1. A tube magazine (14) for a textile machine (100), in particular a spinning machine, having:
- a plurality of holding devices (18) each for receiving a bobbin tube;
- at least one marking device (16),
wherein the at least one marking device (16) is designed and arranged to be assigned to a plane which is arranged between at least two holding devices (18) in such a way that the at least two holding devices (18) are each assigned to a region (40)
**characterized in that**
the at least one marking device (16) is designed to be insertable into holders (36) in the tube magazine (14).

2. The tube magazine (14) according to claim 1, **characterized in that** at least one of the following arrangements as arrangement of the at least one marking device (16) is formed:
wherein the at least one marking device (16) is arranged in a vertical direction in a plane which runs between two rows of holding devices (18); or
wherein the at least one marking device (16) is arranged in a horizontal direction in a plane which runs between two rows of holding devices (18).

3. The tube magazine (14) according to either claim 1 or claim 2, **characterized in that** the at least one marking device (16) is designed as a flexible marking device (11); or
wherein the at least one marking device (16) is designed as a rigid marking device (17).

4. The tube magazine (14) according to any of the preceding claims, **characterized in that** the at least one marking device (16) has an indicator, in particular a color coding, corresponding to an indicator, in particular a color coding, of a type of bobbin tube to be arranged in at least one of the regions (40).

5. The tube magazine (14) according to any of the preceding claims, **characterized in that** the at least one marking device (16) has at least one of the following:
- a band, in particular an expander;
- a bar;
- a chain;
- a rod; and
- a metal sheet, in particular a partition wall.

6. The tube magazine (14) according to any of the preceding claims, in particular according to any of claims 4 or 5, **characterized in that** the at least one marking device (16) has an indicator, in particular a color coding, corresponding to an indicator, in particular a color coding, of a type of bobbin tube to be arranged in at least one of the regions (40), wherein the corresponding indicator, in particular the corresponding color coding, points in the direction of the respective region (40) of the tube magazine (14) in which the bobbin tubes with a corresponding indicator are to be arranged.

7. The tube magazine (14) according to any of the preceding claims, **characterized in that** the at least one marking device (16) is designed to be arranged at an arrangement height, in particular an attachment height, in particular in order to project into a field of vision of an operator.

8. The tube magazine (14) according to any of the preceding claims, **characterized in that** at least one example tube is assigned to a region (40).

9. A textile machine (100) having a tube magazine (14) according to any of the preceding claims.

10. A machine head (10) of a textile machine (100), in particular according to claim 9, **characterized in that** the machine head (10) has a tube magazine (14) according to any of claims 1 to 8.

11. A use of a tube magazine (14) according to any of claims 1 to 8, a textile machine (100) according to claim 9 and/or a machine head (10) according to claim 10, **characterized in that** at least two bobbin tubes of two types of bobbin tube are each assigned to a region (40), wherein the regions are marked by a marking device (16), wherein the marking device (16) is designed and arranged to be assigned to a plane between the at least two holding devices (18) in such a way that the at least two holding devices (18) are each assigned to a region (40).

## Revendications

1. Magasin de tubes (14) pour une machine textile (100), en particulier une machine à filer, comprenant :
- une pluralité de dispositifs de maintien (18), chacun pour la réception d'un tube de bobine ;
- au moins un dispositif de marquage (16), lequel au moins un dispositif de marquage (16) est conçu et agencé pour être associé à un plan qui est disposé entre au moins deux dispositifs de maintien (18), de manière à attribuer les au moins deux dispositifs de maintien (18) chacun à une zone (40),
**caractérisé en ce que**
ledit au moins un dispositif de marquage (16) est conçu pour pouvoir être inséré dans des supports (36) dans le magasin de tubes (14).

2. Magasin de tubes (14) selon la revendication 1, **caractérisé en ce que** au moins un des agencements suivants est réalisé en tant qu'agencement dudit au moins un dispositif de marquage (16) :
ledit au moins un dispositif de marquage (16) est agencé dans une direction verticale dans un plan qui s'étend entre deux rangées de dispositifs de maintien (18) ; ou
ledit au moins un dispositif de marquage (16) est agencé dans une direction horizontale dans un plan qui s'étend entre deux rangées de dispositifs de maintien (18).

3. Magasin de tubes (14) selon l'une des revendications 1 ou 2, **caractérisé en ce que** ledit au moins un dispositif de marquage (16) est réalisé sous la forme d'un dispositif de marquage flexible (11) ; ou
ledit au moins un dispositif de marquage (16) est réalisé sous la forme d'un dispositif de marquage rigide (17).

4. Magasin de tubes (14) selon l'une des revendications précédentes, **caractérisé en ce que** ledit au moins un dispositif de marquage (16) présente un indicateur, en particulier un marquage de couleur, correspondant à un indicateur, en particulier un marquage de couleur, d'un type de tube de bobine à disposer dans au moins une des zones (40).

5. Magasin de tubes (14) selon l'une des revendications précédentes, **caractérisé en ce que** ledit au moins un dispositif de marquage (16) comprend au moins l'un des éléments suivants:
- une bande, en particulier un extenseur ;
- une barrette ;
- une chaîne ;
- une tige ; et
- une tôle, en particulier une paroi de séparation.

6. Magasin de tubes (14) selon l'une des revendications précédentes, en particulier selon l'une des revendications 4 ou 5, **caractérisé en ce que** ledit au moins un dispositif de marquage (16) présente un indicateur, en particulier un marquage de couleur, correspondant à un indicateur, en particulier un marquage de couleur, d'un type de tube de bobine à disposer dans au moins une des zones (40), l'indicateur correspondant, en particulier le marquage de couleur correspondant, étant orienté en direction de la zone respective (40) du magasin de tubes (14) dans laquelle les tubes de bobine avec un indicateur correspondant doivent être disposés.

7. Magasin de tubes (14) selon l'une des revendications précédentes, **caractérisé en ce que** ledit au moins un dispositif de marquage (16) est conçu de manière à être agencé à une hauteur d'agencement, en particulier une hauteur d'enfichage, notamment pour faire saillie dans un champ de vision d'un opérateur.

8. Magasin de tubes (14) selon l'une des revendications précédentes, **caractérisé en ce que** au moins un tube d'exemple est attribué à une zone (40).

9. Machine textile (100) comprenant un magasin de tubes (14) selon l'une des revendications précédentes.

10. Tête de machine (10) d'une machine textile (100), en particulier selon la revendication 9, **caractérisée en ce que** la tête de machine (10) comprend un magasin de tubes (14) selon l'une des revendications 1 à 8.

11. Utilisation d'un magasin de tubes (14) selon l'une des revendications 1 à 8, d'une machine textile (100) selon la revendication 9 et/ou d'une tête de machine (10) selon la revendication 10, **caractérisée en ce que** au moins deux tubes de bobine de deux types de tubes de bobine sont attribués chacun à une zone (40), les zones étant marquées par un dispositif de marquage (16), lequel dispositif de marquage (16) est conçu et agencé pour être associé à un plan entre les au moins deux dispositifs de maintien (18), de manière à attribuer les au moins deux dispositifs de maintien (18) chacun à une zone (40).
